# EUROPÄISCHE PATENTSCHRIFT

(11) **EP 3 017 253 B1**
(45) Veröffentlichungstag und Bekanntmachung des Hinweises auf die Patenterteilung: **26.04.2017**
(21) Anmeldenummer: 14771226.9
(22) Anmeldetag: 10.09.2014
(51) Int. Cl.: F23R 3/00

(54) **KERAMISCHES HITZESCHILD FÜR EINE GASTURBINENBRENNKAMMER, BRENNKAMMER FÜR EINE GASTURBINE UND VERFAHREN**
CERAMIC HEAT SHIELD FOR A GAS TURBINE COMBUSTION CHAMBER, COMBUSTION CHAMBER FOR A GAS TURBINE AND METHOD
BOUCLIER THERMIQUE CÉRAMIQUE POUR UNE CHAMBRE DE COMBUSTION DE TURBINE À GAZ, CHAMBRE DE COMBUSTION POUR UNE TURBINE À GAZ ET PROCÉDÉ

(30) Priorität: 11.09.2013 DE 102013218151
(43) Veröffentlichungstag der Anmeldung: 11.05.2016
(73) Patentinhaber: Siemens Aktiengesellschaft, 80333 München (DE)
(72) Erfinder: LARSON, Marco, 45476 Mülheim (DE); TERTILT, Marc, 45529 Hattingen (DE)
(86) Internationale Anmeldenummer: PCT/EP2014/069289
(87) Internationale Veröffentlichungsnummer: WO 2015/036430

(56) Entgegenhaltungen:
- EP-A1- 1 741 981
- EP-A1- 2 428 647
- GB-A- 2 441 342

## Beschreibung

Die Erfindung betrifft ein Hitzeschild für eine Brennkammer einer Gasturbine, eine Brennkammer mit einem derartigen Hitzeschild, und ein Verfahren zum Auskleiden einer Brennkammer für eine Gasturbine.

Die Wände von Hochtemperaturgasreaktoren, wie z.B. von unter Druck betriebenen Gasturbinen-Brennkammern, müssen mit geeigneten Abschirmungen ihrer tragenden Struktur gegen Heißgasangriff geschützt werden.

Die Hitzeschilde umfassen eine Tragstruktur und an der Tragstruktur befestigte, flächendeckend angeordnete Hitzeschildelemente, die die Tragstruktur und die Brennkammerwand vor Heißgasen schützen. Für das Material der Hitzeschildelemente bieten sich keramische Materialen an. Keramische Materialen weisen im Vergleich zu metallischen Werkstoffen eine hohe Temperaturbeständigkeit, Korrosionsbeständigkeit und niedrige Wärmeleitfähigkeit auf. Es sind aber auch metallische Hitzeschildelemente bekannt, welche mit einer Wärmeschutzschicht ausgerüstet sind. Wegen materialtypischer Wärmedehnungseigenschaften und der im Rahmen des Betriebes typischerweise auftretenden Temperaturunterschiede (Umgebungstemperatur bei Stillstand, maximale Temperatur bei Volllast) muss eine temperaturabhängige Ausdehnung der Hitzeschildelemente gewährleistet sein, damit keine bauteilzerstörenden thermischen Spannungen durch Dehnungsbehinderung auftreten. Dies kann erreicht werden, indem die vor Heißgasangriff zu schützende Wand durch eine Vielzahl von in ihrer Größe begrenzten einzelnen Hitzeschildelementen ausgekleidet wird. Zwischen der Tragstruktur und den einzelnen Hitzeschildelementen muss ein Dehnspalt vorgesehen werden, der aus Sicherheitsgründen auch im Betriebszustand nie völlig geschlossen sein darf. Dabei muss sichergestellt werden, dass das Heißgas nicht über den Dehnspalt die tragende Wandstruktur übermäßig erwärmt.

Aufgrund der geometrischen Form der bekannten Hitzeschildelemente in den Gasturbinenbrennkammern werden die freiliegenden Flächen der Tragstruktur (der Dehnspalt) sowie überstehende Kannten der Tragstruktur nicht optimal vor den thermischen Belastung der Brennkammer geschützt. Dadurch kommt es an diesen Stellen zu thermischen Überbelastungen der Tragstruktur, die aufwendig repariert werden müssen. Erschwerend kommt hinzu, dass sich die für die thermische Dehnung benötigten Spalte aufgrund der Toleranzbehafteten Brennkammerbauteile nicht optimal einstellen lassen. Durch das grobe Toleranzfeld der Bauteile kommt es zu übermäßig großen Dehnungsspalten in der Gasturbinenbrennkammer. Dadurch ist es dem Heißgas möglich, in die Dehnungsspalten einzudringen und die metallischen Bauteile zu beschädigen. Die beschädigten Bauteile müssen entweder ausgetauscht werden oder es kommt ein Ausschleifen der beschädigten Stellen an der Tragstruktur mit anschließenden Auftragsschweißen und Nacharbeiten der betroffenen Stellen in Betracht. Es ist auch möglich, die thermisch belasteten Stellen mit einer keramischen Schutzschicht zu beschichten oder eine hochtemperaturfeste Legierung auf thermisch hochbelasteten Bauteile aufzutragen.

Der Erfindung liegt die Aufgabe zugrunde, ein Hitzeschild, eine Brennkammer, und ein Verfahren zur Auskleidung einer Brennkammer mit einem Hitzeschild anzugeben, mit welchem eine Beschädigung von Bauteilen einer Brennkammer durch Heißgaseinzug besonders effektiv vermieden werden kann.

Erfindungsgemäß wird diese Aufgabe gelöst durch ein Hitzeschild nach Anspruch 1, eine Brennkammer nach Anspruch 8 und ein Verfahren zum Auskleiden einer Brennkammer gemäß Anspruch 11. Ein in dem erfindungsgemäßen Hitzeschild zu verwendendes Hitzeschildelement verändert die Strömung eines in der Richtung über die Heißseite des Hitzeschildelementes strömenden Heißgases vorteilhaft, so dass einem Heißgaseinzug in den Dehnungsspalt, welcher sich an das Hitzeschildelement in der Anstiegsrichtung anschließt, entgegengewirkt wird. Zudem kann der ansteigende Bereich des Hitzeschildelementes die angrenzenden Strukturen gegen Wärmestrahlung abschirmen. Mit anderen Worten erstreckt sich der Anstieg des ansteigenden Bereichs in der Anstiegsrichtung im Wesentlichen bis zu mindestens einer Umfangsseite oder bis zu einem die Heißseite über die Grundfläche der Kaltseite verlängernden Vorsprung. Der ansteigende Bereich wirkt als Spoiler.

Die Höhe des Hitzeschildelementes kann beispielsweise erst ab der Mitte des Hitzeschildelementes ansteigen. Beispielsweise kann die Höhe stetig ansteigen oder auch nicht. Der Anstieg kann beispielsweise bis zu der Umfangsseite linear verlaufen oder beispielsweise von einem im Wesentlichen linearen Anstieg stetig in einen im Wesentlichen horizontalen Verlauf eines die Heißseite über die Grundfläche der Kaltseite verlängernden Vorsprungs übergehen. Der Anstieg kann sich aber auch im Bereich des Vorsprungs fortsetzen, so dass der Anstieg sich bis zur Umfangsseite erstreckt, die mit der Stirnseite des Vorsprungs an die Heißseite angrenzt. Sofern die Anstiegsrichtung senkrecht auf eine Umfangsfläche weist, ist die Höhe der Umfangsseite in der Anstiegsrichtung größer als die Höhe der Umfangsseite in der Gegenrichtung Es kann vorteilhaft vorgesehen sein, dass der ansteigende Bereich sich mindestens über die gesamte Grundfläche der Kaltseite erstreckt.

Mit anderen Worten ist das gesamte Hitzeschildelement im Wesentlichen spoilerförmig ausgebildet.

Bevorzugt kann die Höhe des Hitzeschildelementes in dem ansteigenden Bereich in der Anstiegsrichtung stetig, insbesondere linear, ansteigen.

Es kann auch vorteilhaft vorgesehen sein, dass die Anstiegsrichtung im Wesentlichen senkrecht auf eine Umfangsseite des Hitzeschildelementes weist.

Weiter kann vorteilhaft vorgesehen sein, dass das Hitzeschildelement an der Umfangsseite, auf welche die Anstiegsrichtung weist, einen sich im Wesentlichen über die Breite der Umfangsseite erstreckenden Vorsprung umfasst, mit einer von der Heißseite umfassten Oberseite und einer gegenüberliegenden Unterseite.

Mittels des Vorsprungs kann das Heißgas zusätzlich an einem Eindringen in einen Dehnungsspalt oder einer Beschädigung angrenzender Strukturen gehindert werden. Hervorstehende Kanten der Brennkammertragstruktur können mittels des Vorsprungs geschützt werden. Der Vorsprung kann eine konstante Höhe aufweisen oder als eine Weiterführung der Rampe bis zur Umfangsseite eine ansteigende Höhe der Oberseite aufweisen.

Eine weitere vorteilhafte Ausgestaltung der Erfindung kann vorsehen, dass die Stirnseite höher ist als ein an die Stirnseite angrenzender Bereich der Tragstruktur und/oder als an die Stirnseite angrenzende Hitzeschildelemente auf ihrer der Stirnseite zugewandten Seite.

Dies verändert das Strömungsverhalten eines in der Richtung über die Hitzeschildelemente der Reihe strömenden Heißgases besonders vorteilhaft, so dass sich ein Heißgaseinzug in die angrenzende Dehnungsspalte der Stirnseite besonders effektiv vermeiden lässt.

Um die angrenzenden Strukturen noch besser zu schützen, kann vorteilhaft vorgesehen sein, dass mindestens ein Hitzeschildelement der Reihe nach Anspruch 5 ausgebildet ist, wobei der Vorsprung des Hitzeschildelementes über einen jeweils angrenzenden Bereich der Tragstruktur ragt und/oder über einen Bereich eines angrenzenden Hitzeschildelements.

Die keramische Abschlussreihe begrenzt die von den keramischen Hitzeschildelementen überdeckte Fläche an einer Seite der überdeckten Fläche.

Mit einer erfindungsgemäßen Brennkammer kann eine Beschädigung von Bauteilen der Brennkammer durch Heißgaseinzug besonders effektiv vermieden werden. Hierzu umfasst die Brennkammer ein Hitzeschild nach einem der Ansprüche 1 bis 7. Bevorzugt geht die Erfindung von einer Brennkammer aus, deren Brennkammerwand an ihrem stromauf gelegenen Ende eine umlaufende Komponente umfasst, in welche mindestens eine ringförmige Nut eingebracht ist, wobei in der Nut ein das Brennkammerkopfende nach innen begrenzender Flammboden befestigt ist und das Hitzeschild mit einer umlaufenden Abschlussreihe an den die Nut nach einer Seite begrenzenden Steg unter Belassung einer Dehnungsspalte angrenzt, wobei die Anstiegsrichtung der Hitzeschildelemente der Abschlussreihe auf den Steg weist und die dem Steg zugewandten Stirnseite der Abschlussreihe höher ist als der angrenzende Bereich des Steges.

Der Steg wird bei Silobrennkammern auch mit F-Ring bezeichnet. Durch die Spoiler-Form der Hitzeschildelemente wird die Rezirkulationszone des Heißgases positiv beeinflusst. Dadurch wird das Eindringen des Heißgases in die Dehnungsspalte zwischen der Abschlussreihe dem F-Ring erschwert und eine mögliche Beschädigung der Tragstruktur verhindert. Zusätzlich schirmt die Spoiler-Form den F-Ring gegen Wärmestrahlung ab.

Vorteilhafterweise kann weiter vorgesehen sein, dass die Hitzeschildelemente der Abschlussreihe gemäß Anspruch 5 ausgebildet sind, wobei der Vorsprung über den Bereich des Steges ragt, welcher zwischen Flammboden und Abschlussreihe verläuft.

Eine weitere Aufgabe der Erfindung ist es, ein Verfahren zum Auskleiden einer Brennkammer mit einem Hitzeschild anzugeben, wobei Hitzeschildelemente in Reihen unter Belassung von Dehnungsspalten zwischen den Hitzeschildelementen an einer an der Brennkammerwand der Brennkammer angeordneten Tragstruktur des Hitzeschildes befestigt werden.
Mit dem Verfahren kann eine Beschädigung von Bauteilen der Brennkammer durch Heißgaseinzug besonders effektiv vermieden werden.

Hierzu werden bis auf eine zuletzt anzuordnende Reihe die Dehnungsspalten zwischen den Reihen auf eine Soll-Dehnungsspaltenbreite angepasst. Dann wird eine verbleibende Breite der für die zuletzt anzuordnende Reihe belassene Lücke bestimmt und aus dieser Breite unter Berücksichtigung der Soll-Dehnungsspaltenbreite eine Soll-Breite der Hitzeschildelemente der zuletzt anzuordnenden Reihe ermittelt. Es werden die Hitzeschildelemente der zuletzt anzuordnenden Reihe entsprechend der Soll-Breite der Hitzeschildelemente angefertigt und in der Lücke angeordnet.

Mit dem Verfahren können trotz der erheblichen Toleranzwerte in den Abmessungen der Bauteile die Dehnungsspalten auf eine Sollwert-Breite minimiert werden.

Um die Hitzeschildelemente der zuletzt anzuordnenden Reihe auf eine Soll-Breite anzupassen, kann beispielsweise ein Hitzeschildelement mit Überlänge auf eine entsprechende Länge gekürzt werden. Das erfindungsgemäße Verfahren ermöglicht es, die Längentoleranzen der einzelnen Brennkammerbauteile zu kompensieren. Dadurch können die benötigten Dehnungsspalten zwischen den Reihen in der Brennkammer auf ein Minimum reduziert werden, wodurch die Größe der freiliegenden Tragstruktur effektiv verringert und so vor dem Heißgas abgeschirmt wird.

Erfindungsgemäß wird die Breite der für die zuletzt anzuordnende Reihe belassene Lücke bestimmt, indem die Lücke provisorisch mit Hitzeschildelementen vermessener Breite ausgekleidet wird und die Breite mindestens einer an die provisorisch angeordnete Reihe angrenzenden Dehnungsspalte während des Betriebs der Brennkammer bestimmt wird.

Dies ermöglicht es, für die Sollwert-Breite der Dehnungsspalten einen verringerten Wert auf das im Betrieb der Maschine benötigte Maß anzusetzen.

Um bei einer Gasturbine mit mindestens einer Brennkammer eine Beschädigung von Bauteilen durch Heißgaseinzug besonders effektiv zu vermeiden, können zur Minimierung der Dehnspalten die Hitzeschildelemente mittels des Verfahrens nach Anspruch 11 an der Tragstruktur angeordnet werden.

Weitere zweckmäßige Ausgestaltungen und Vorteile der Erfindung sind Gegenstand der Beschreibung von Ausführungsbeispielen der Erfindung unter Bezug auf die Figuren, wobei gleiche Bezugszeichen auf gleich wirkende Bauteile verweisen.

### Dabei zeigt die

- Fig.1: schematisch einen Längsschnitt durch eine Gasturbien nach dem Stand der Technik,
- Fig.2: schematisch ein Hitzeschildelement in einem Längsschnitt, zur Verwendung in einem erfindungsgemäßen Hitzeschild,
- Fig.3: schematisch einen Ausschnitt einer Brennkammer gemäß einem Ausführungsbeispiel der Erfindung in einem Längsschnitt, und
- Fig.4: eine Vergrößerung des in Figur 2 umkreisten Abschnitts der Brennkammer im Bereich des F-Ringes am Brennkammerkopfende.

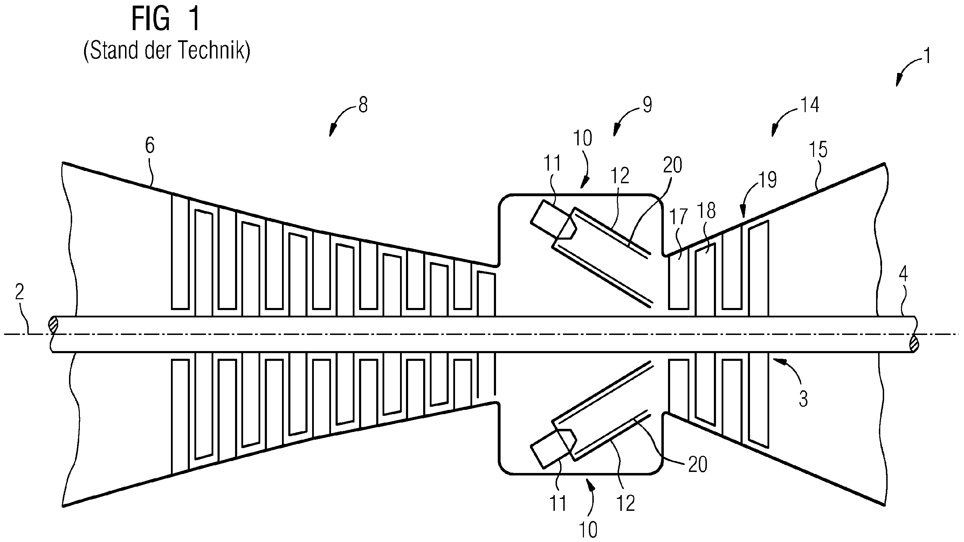

Die Figur 1 zeigt eine schematische Schnittansicht einer Gasturbine 1 nach dem Stand der Technik. Die Gasturbine 1 weist im Inneren einen um eine Rotationsachse 2 drehgelagerten Rotor 3 mit einer Welle 4 auf, der auch als Turbinenläufer bezeichnet wird. Entlang des Rotors 3 folgen aufeinander ein Ansauggehäuse 6, ein Verdichter 8, ein Verbrennungssystem 9 mit mindestens einer Brennkammern 10, eine Turbine 14 und ein Abgasgehäuse 15. Die Brennkammern 10 umfassen jeweils eine Brenneranordnung 11 und ein Gehäuse 12, welches zum Schutz vor Heißgasen mit einem Hitzeschild 20 ausgekleidet ist. Bei der Brennkammer 10 kann es sich beispielsweise um eine Ringbrennkammer oder eine Rohrbrennkammer oder eine Silobrennkammer handeln.

Das Verbrennungssystem 9 kommuniziert mit einem beispielsweise ringförmigen Heißgaskanal. Dort bilden mehrere hintereinander geschaltete Turbinenstufen die Turbine 14. Jede Turbinenstufe ist aus Schaufelringen gebildet. In Strömungsrichtung eines Arbeitsmediums gesehen folgt im Heißkanal einer aus Leitschaufeln 17 gebildeten Reihe eine aus Laufschaufeln 18 gebildete Reihe. Die Leitschaufeln 17 sind dabei an einem Innengehäuse eines Stators 19 befestigt, wohingegen die Laufschaufeln 18 einer Reihe beispielsweise mittels einer Turbinenscheibe am Rotor 3 angebracht sind. An dem Rotor 3 angekoppelt ist beispielsweise ein Generator (nicht dargestellt). Während des Betriebes der Gasturbine wird vom Verdichter 8 durch das Ansauggehäuse 6 Luft angesaugt und verdichtet. Die am turbinenseitigen Ende des Verdichters 8 bereitgestellte verdichtete Luft wird zu dem Verbrennungssystem 9 geführt und dort im Bereich der Brenneranordnung 11 mit einem Brennstoff vermischt. Das Gemisch wird dann mit Hilfe der Brenneranordnung 11 unter Bildung eines Arbeitsgasstromes im Verbrennungssystem 9 verbrannt. Von dort strömt der Arbeitsgasstrom entlang des Heißgaskanals an den Leitschaufeln 17 und den Laufschaufeln 18 vorbei. An den Laufschaufeln 18 entspannt sich der Arbeitsgasstrom impulsübertragend, so dass die Laufschaufeln 18 den Rotor 3 antreiben und dieser den an ihn angekoppelten Generator (nicht dargestellt).

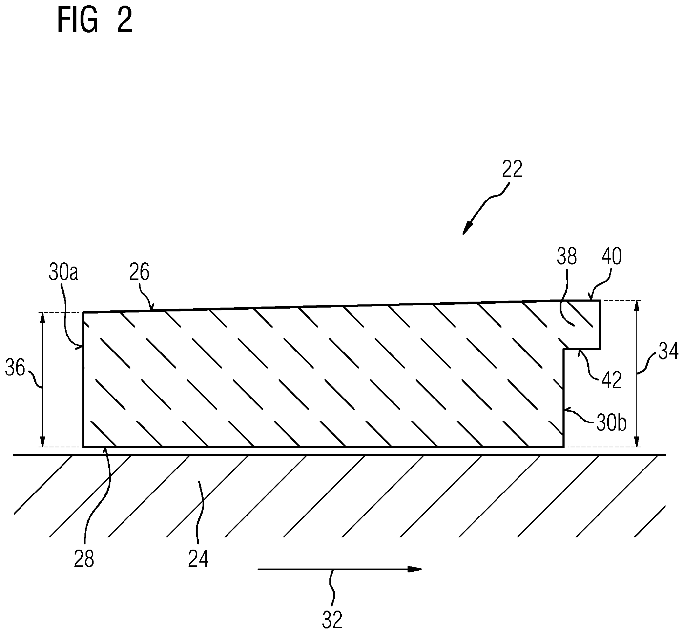

Die Figur 2 zeigt schematisch ein Hitzeschildelement 22 zur Verwendung in einem erfindungsgemäßen Hitzeschild, in einem Längsschnitt. Das Hitzeschildelement 22 ist an einer von einem Hitzeschild umfassten Tragstruktur 24 befestigbar. Beispielsweise mittels Halteelementen (nicht dargestellt), die in entsprechende Eingriffseinrichtungen (nicht dargestellt) am Hitzeschildelement 22 eingreifen. Das Hitzeschildelement 22 weist eine mit Heißgas beaufschlagbare Heißseite 26 und eine der Heißseite gegenüberliegende Kaltseite 28 auf. Das Hitzeschildelement 22 ist mit der Kaltseite 28 zur Tragstruktur 24 weisend an der Tragstruktur 24 befestigbar. Das Hitzeschildelement 22 umfasst auch vier Umfangsseiten, von denen zwei gegenüberliegende Umfangsseiten 30a, 30b in der Ansicht zu erkennen sind.

Die Umfangsseiten verbinden die Kaltseite mit der Heißseite. Das Hitzeschildelement 22 weist eine Spoilerform auf und ist bis auf einen die Heißseite über die Grundfläche der Kalteseite 28 hinaus verlängernden Vorsprung 38 als ansteigender Bereich ausgebildet, so dass die Höhe des Hitzeschildelementes in einer Anstiegsrichtung 32 über die gesamte Länge der Kaltseite 28 ansteigt. Das Hitzeschildelement 22 ist somit im Wesentlichen spoilerförmig ausgebildet. Die Höhe 34 des Hitzeschildelementes ist im Bereich der mindestens einen Umfangsseite 30b, auf welche die Anstiegsrichtung 32 weist, größer als die Höhe 36 des Hitzeschildelementes im Bereich der mindestens einen Umfangsseite 30a in der Gegenrichtung.

Die Anstiegsrichtung 32 weist senkrecht auf die Umfangsseite 30b. Der ansteigende Bereich erstreckt sich somit in der Anstiegsrichtung 32 bis zu dem Vorsprung 38, wobei der ansteigende Bereich in der Gegenrichtung von der Umfangsseite 30a begrenzt wird.

Die Umfangsseite 30b, auf welche die Anstiegsrichtung 32 weist, umfasst einen sich über die Breite der Umfangsseite 30b erstreckenden Vorsprung 38. Der Vorsprung 38 weist eine von der Heißseite umfasste Oberseite 40 und einer gegenüberliegenden Unterseite 42 auf. Das Hitzeschildelement 22 besteht bevorzugt aus einem keramischen Material. Die Höhe des Hitzeschildelementes steigt über die gesamte Breite (die Breite verläuft hier senkrecht zur Zeichenebene) des Hitzeschildelementes in der Anstiegsrichtung 32 im Wesentlichen über die gesamte Länge der Kaltseite stetig und linear an, wobei im Übergang zu der Oberseite des Vorsprungs der Anstieg stetig in den horizontalen Verlauf der Oberseite des Vorsprungs übergeht.

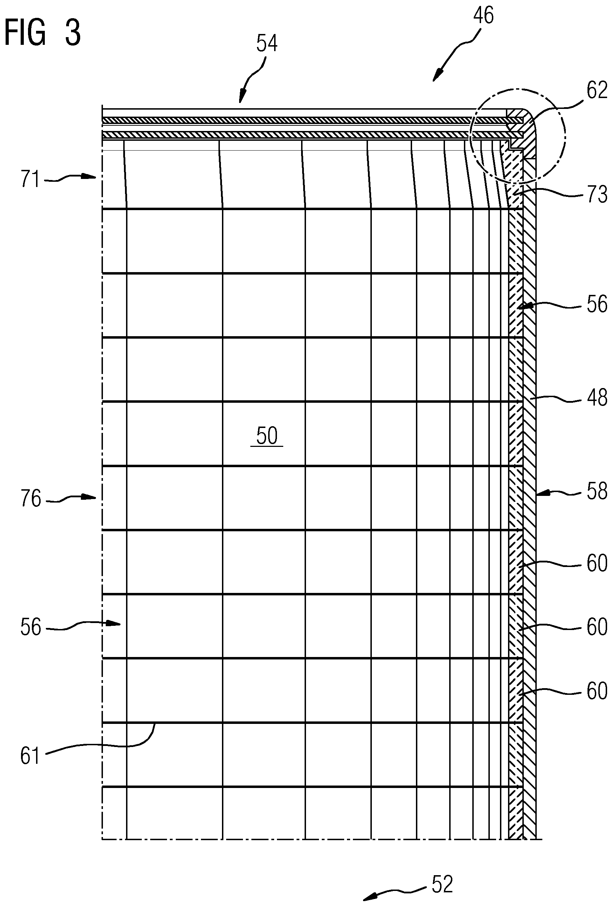

Die Figur 3 zeigt stark schematisch vereinfacht einen Ausschnitt einer erfindungsgemäßen Brennkammer 46 im Längsschnitt. Die Brennkammer 46 umfasst eine Brennkammerwand 48, die einen die Brennkammer durchströmenden Heißgaspfad 50 begrenzt und an ihrem stromab gelegenen Ende einen nicht näher dargestellten Brennkammerausgang 52 aufweist, welcher an einem Turbineneintritt der Gasturbine anordnenbar ist. An ihrem stromauf gelegenen Ende umfasst die Brennkammer ein Brennkammerkopfende 54, wobei das Brennkammerkopfende 54 eine Brenneranordnung (nicht dargestellt) umfasst. Die Brennkammer 46 ist zum Schutz vor Heißgasen mit einem Hitzeschild 56 ausgekleidet. Das Hitzeschild 56 umfasst eine Tragstruktur 58 und einer Anzahl an Hitzeschildelementen 60, 73 auf, welche im Wesentlichen flächendeckend unter Belassung von Dehnungsspalten 61 an der Tragstruktur 58 befestigt sind.

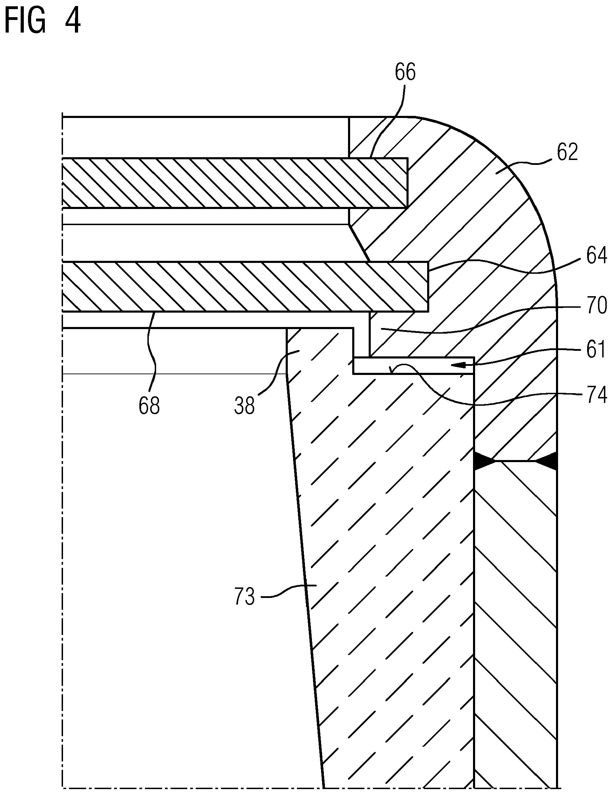

Die Brennkammerwand 48 umfasst an ihrem stromauf gelegenen Ende eine umlaufende Komponente 62, wobei dieser Bereich der Brennkammer in der Figur 4 vergrößert dargestellt ist. Wie in der Figur 4 zu erkennen ist, sind in die umlaufende Komponente 62 zwei ringförmige Nuten 64, 66 eingebracht. In der Nut 64 ist ein das Brennkammerkopfende 54 nach innen begrenzender Flammboden 68 befestigt. Der Hitzeschild grenzt mit einer umlaufenden, keramischen Abschlussreihe 71 an den die Nut 64 nach einer Seite begrenzenden Steg 70 unter Belassung einer Dehnungsspalte 61 an. Die Hitzeschildelemente der Abschlussreihe 71 sind erfindungsgemäß ausgebildet, wobei die Anstiegsrichtung der spoilerförmig ausgebildeten Hitzeschildelemente auf den Steg 70 weist und die dem Steg 70 zugewandten Stirnseite 74 der Abschlussreihe 71 höher ist als der angrenzende Bereich des Steges 70.

Die dem Steg zugewandte Umfangsseite der Hitzeschildelemente 73 weist einen Vorsprung 38 auf, wobei der Vorsprung 38 über den Bereich des Steges 70 ragt, welcher zwischen Flammboden 68 und Abschlussreihe 71 verläuft.

Um die Brennkammerwand 48 zusätzlich vor Heißgasen zu schützen, können die Hitzeschildelemente des Hitzeschilds 56 mittels des Verfahrens nach Anspruch 11 verlegt werden.

## Patentansprüche

1. Hitzeschild (20, 56) für eine Brennkammer einer Gasturbine mit einer Tragstruktur (24, 58) und einer Anzahl an Hitzeschildelementen (22, 60, 73) bestehend aus einem keramischen Material, welche eine mit Heißgas beaufschlagbare Heißseite (26) und eine der Heißseite (26) gegenüberliegende Kaltseite (28) und Umfangsseiten (30a, 30b) umfassen, welche jeweils die Heißseite (26) mit der Kaltseite (28) verbinden, wobei die Hitzeschildelemente (22, 60, 73) mit der Kaltseite (28) zur Tragstruktur (24, 58) weisend im Wesentlichen flächendeckend unter Belassung von Dehnungsspalten (61) an der Tragstruktur (24, 58) des Hitzeschildes (56) befestigt sind und normal zur Kaltseite eine Höhe aufweisen, wobei die Höhe mindestens einer Reihe (71) aus Hitzeschildelementen (22, 73) in einer Anstiegsrichtung (32) ansteigt, wobei sich der ansteigende Bereich der Hitzeschildelemente in der Anstiegsrichtung (32) im Wesentlichen bis zu mindestens einer Umfangsseite (30b) oder bis zu einem die Heißseite (26) über die Grundfläche der Kaltseite (28) verlängernden Vorsprung (38) erstreckt, wobei die jeweilige Anstiegsrichtung (32) der Hitzeschildelemente (22, 73) auf eine gemeinsame Stirnseite (74) der Reihe (71) weist,
**dadurch gekennzeichnet, dass**
die Reihe (71) eine stromauf angeordnete Abschlussreihe des Hitzeschildes (20, 56) ist, wobei die Anstiegsrichtung (32) stromaufwärts ausgerichtet ist.

2. Hitzeschild (20, 56) nach Anspruch 1,
**dadurch gekennzeichnet, dass**
der ansteigende Bereich sich mindestens über die gesamte Grundfläche der Kaltseite (28) erstreckt.

3. Hitzeschild (20, 56) nach einem der Ansprüche 1 oder 2,
**dadurch gekennzeichnet, dass**
die Höhe des Hitzeschildelementes (22, 73) in dem ansteigenden Bereich in der Anstiegsrichtung (32) stetig, insbesondere linear, ansteigt.

4. Hitzeschild (20, 56) nach einem der Ansprüche 1 bis 3,
**dadurch gekennzeichnet, dass**
die Anstiegsrichtung (32) im Wesentlichen senkrecht auf eine Umfangsseite (30b) weist.

5. Hitzeschild (20, 56) nach Anspruch 4,
**dadurch gekennzeichnet, dass**
die Hitzeschildelemente (22, 73) mit ansteigender Höhe an der Umfangsseite (30b), auf welche die Anstiegsrichtung (32) weist, einen sich im Wesentlichen über die Breite der Umfangsseite (30b) erstreckenden Vorsprung (38) umfasst, welcher (38) eine von der Heißseite (26) umfasste Oberseite (40) und eine gegenüberliegende Unterseite (42) aufweist.

6. Hitzeschild (20, 56) nach einem der Ansprüche 1 bis 5,
**dadurch gekennzeichnet, dass**
die Stirnseite (74) eines Hitzeschildelementes (20, 73) höher ist als ein an die Stirnseite (74) angrenzender Bereich der Tragstruktur (24, 58).

7. Hitzeschild (20, 56) nach Anspruch 6,
**dadurch gekennzeichnet, dass**
der Vorsprung (38) des Hitzeschildelementes über einen jeweils angrenzenden Bereich der Tragstruktur ragt.

8. Brennkammer (10) für eine Gasturbine, mit einer Brennkammerwand (48), die einen die Brennkammer (10) durchströmenden Heißgaspfad (50) begrenzt und an ihrem stromab gelegenen Ende einen Brennkammerausgang (52) aufweist, welcher an einem Turbineneintritt der Gasturbine anordnenbar ist, und an ihrem stromauf gelegenen Ende ein Brennkammerkopfende (54) aufweist, wobei das Brennkammerkopfende eine Brenneranordnung (11) umfasst,
**dadurch gekennzeichnet, dass**
die Brennkammer (10) ein Hitzeschild (20, 56) nach einem der Ansprüche 1 bis 7 umfasst.

9. Brennkammer (10) nach Anspruch 8,
**dadurch gekennzeichnet, dass**
die Brennkammerwand (48) an ihrem stromauf gelegenen Ende eine umlaufende Komponente (62) umfasst, in welche mindestens eine ringförmige Nut (64, 66) eingebracht ist, wobei in der Nuten (64, 66) ein das Brennkammerkopfende (54) nach innen begrenzender Flammboden (68) befestigt ist und das Hitzeschild (20, 56) mit der umlaufenden Abschlussreihe (71) an den die Nut (64) nach einer Seite begrenzenden Steg (70) unter Belassung einer Dehnungsspalte (61) angrenzt, wobei die jeweilige Anstiegsrichtung (32) der Hitzeschildelemente (20 73) der Abschlussreihe (71) auf den Steg (70) weist und die dem Steg (70) zugewandten Stirnseite (74) der Abschlussreihe (71) höher ist als der angrenzende Bereich des Steges (70).

10. Brennkammer (10) nach Anspruch 9,
**dadurch gekennzeichnet, dass**
die Hitzeschildelemente (20, 73) der Abschlussreihe (71) gemäß Anspruch 5 ausgebildet sind, wobei der Vorsprung (38) über den Bereich des Steges (70) ragt, welcher zwischen Flammboden (68) und Abschlussreihe (71) verläuft.

11. Verfahren zum Auskleiden einer Brennkammer (46), für eine Gasturbine, mit einem Hitzeschild (20, 56), wobei Hitzeschildelemente (22, 60) in Reihen unter Belassung von Dehnungsspalten (61) zwischen den Hitzeschildelementen (22, 60) an einer an der Brennkammerwand (48) der Brennkammer (46) angeordneten Tragstruktur (58) des Hitzeschildes (56) befestigt werden,
(a) wobei bis auf eine zuletzt anzuordnende Reihe (76) die Dehnungsspalten zwischen den Reihen auf eine Soll-Dehnungsspaltenbreite angepasst werden,
(b) und eine verbleibende Breite der für die zuletzt anzuordnende Reihe (76) belassene Lücke bestimmt wird,
(c) aus dieser Breite unter Berücksichtigung der Soll-Dehnungsspaltenbreite eine Soll-Breite der Hitzeschildelemente (60) der zuletzt anzuordnenden Reihe (76) ermittelt wird
(d) und die Hitzeschildelemente (60) der zuletzt anzuordnenden Reihe (76) entsprechend der Soll-Breite der Hitzeschildelemente (60) angefertigt und in der Lücke angeordnet werden,
**dadurch gekennzeichnet, dass**
die Breite der für die zuletzt anzuordnende Reihe (76) belassene Lücke bestimmt wird, indem die Lücke provisorisch mit Hitzeschildelementen (60) vermessener Breite ausgekleidet wird und die Breite mindestens einer an die provisorisch angeordnete Reihe angrenzenden Dehnungsspalte (61) während des Betriebs der Brennkammer (46) bestimmt wird.

## Claims

1. Heat shield (20, 56) for a combustion chamber of a gas turbine with a supporting structure (24, 58) and a number of heat shield elements (22, 60, 73) made of a ceramic material, which comprise a hot side (26) that can be exposed to hot gas and a cold side (28) opposite the hot side (26) and peripheral sides (30a, 30b) that in each case connect the hot side (26) to the cold side (28), wherein the heat shield elements (22, 60, 73) are attached to the supporting structure (24, 58) of the heat shield (56) essentially areally while leaving expansion gaps (61), with the cold side (28) facing the supporting structure (24, 58), and have a height normal to the cold side, wherein the height of at least one row (71) of heat shield elements (22, 73) increases in a direction of increasing height (32), wherein the region of increasing height of the heat shield elements extends in the direction of increasing height (32) essentially as far as at least one peripheral side (30b) or as far as a projection (38) that extends the hot side (26) beyond the base area of the cold side (28), wherein the respective direction of increasing height (32) of the heat shield elements (22, 73) is oriented toward a common end face (74) of the row (71),
**characterized in that** the row (71) is a final row of the heat shield (20, 56) arranged upstream, wherein the direction of increasing height (32) is oriented upstream.

2. Heat shield (20, 56) according to Claim 1, **characterized in that** the region of increasing height extends at least over the entire base area of the cold side (28).

3. Heat shield (20, 56) according to either of Claims 1 and 2,
**characterized in that**,
in the region of increasing height, the height of the heat shield element (22, 73) increases continuously, in particular linearly, in the direction of increasing height (32).

4. Heat shield (20, 56) according to one of Claims 1 to 3, **characterized in that** the direction of increasing height (32) is oriented essentially perpendicular to a peripheral side (30b).

5. Heat shield (20, 56) according to Claim 4,
**characterized in that** the heat shield elements (22, 73) with increasing height comprise, on that peripheral side (30b) toward which the direction of increasing height (32) is oriented, a projection (38) extending essentially over the width of the peripheral side (30b), which projection (38) has an upper side (40) which is part of the hot side (26) and, opposite this, an underside (42).

6. Heat shield (20, 56) according to one of Claims 1 to 5,
**characterized in that** the end face (74) of a heat shield element (20, 73) is higher than a region of the supporting structure (24, 58) adjoining the end face (74).

7. Heat shield (20, 56) according to Claim 6,
**characterized in that** the projection (38) of the heat shield element projects beyond a respective adjoining region of the supporting structure.

8. Combustion chamber (10) for a gas turbine,
having a combustion chamber wall (48) which bounds a hot gas path (50) flowing through the combustion chamber (10) and has, at its downstream end, a combustion chamber outlet (52) which can be arranged at a turbine inlet of the gas turbine, and has, at its upstream end, a combustion chamber head end (54), wherein the combustion chamber head end comprises a burner arrangement (11), **characterized in that** the combustion chamber (10) comprises a heat shield (20, 56) according to one of Claims 1 to 7.

9. Combustion chamber (10) according to Claim 8,
**characterized in that** the combustion chamber wall (48) comprises, at its upstream end, an encircling component (62) in which is created at least one annular groove (64, 66), wherein a flame bottom (68), which inwardly bounds the combustion chamber head end (54), is attached in the grooves (64, 66), and the heat shield (20, 56) adjoins the web (70), that bounds the groove (64) to one side, with the encircling final row (71) while leaving an expansion gap (61), wherein the respective direction of increasing height (32) of the heat shield elements (20, 73) of the final row (71) is oriented toward the web (70) and that end face (74) of the final row (71) that is oriented toward the web (70) is higher than the adjoining region of the web (70).

10. Combustion chamber (10) according to Claim 9,
**characterized in that** the heat shield elements (20, 73) of the final row (71) are formed according to claim 5, wherein the projection (38) projects over that region of the web (70) that runs between the flame bottom (68) and the final row (71).

11. Method for lining a combustion chamber (46), for a gas turbine, with a heat shield (20, 56),
wherein heat shield elements (22, 60) are attached in rows, while leaving expansion gaps (61) between the heat shield elements (22, 60), on a supporting structure (58), arranged on the combustion chamber wall (48) of the combustion chamber (46), of the heat shield (56),
(a) wherein, with the exception of a row (76) that is to be arranged last, the expansion gaps between the rows are matched to an ideal expansion gap width,
(b) and a remaining width of the space left for the row (76) that is to be arranged last is determined,
(c) from this width, taking into account the ideal expansion gap width, an ideal width of the heat shield elements (60) of the row (76) that is to be arranged last is determined,
(d) and the heat shield elements (60) of the row (76) that is to be arranged last are produced in accordance with the ideal width of the heat shield elements (60) and are arranged in the space,
**characterized in that** the width of the space left for the row (76) that is to be arranged last is determined by provisionally lining the space with heat shield elements (60) of measured width, and the width of at least one expansion gap (61) adjoining the provisionally arranged row is determined during operation of the combustion chamber (46).

## Revendications

1. Bouclier ( 20, 56 ) thermique pour une chambre de combustion d'une turbine à gaz ayant une structure ( 24, 58 ) porteuse et un certain nombre d'éléments ( 22, 60, 73 ) de bouclier thermique en un matériau céramique, qui comprennent un côté ( 26 ) chaud pouvant être soumis à du gaz chaud et un côté ( 28 ) froid opposé au côté ( 26 ) chaud et des côtés ( 30a, 30b ) périphériques, qui relient respectivement le côté ( 26 ) chaud au côté ( 28 ) froid, les éléments ( 22, 60, 73 ) du bouclier thermique tournés par le côté ( 28 ) froid vers la structure ( 24, 58 ) porteuse étant fixés sensiblement à recouvrement de surface en laissant des fentes ( 61 ) de dilatation à la structure ( 24, 58 ) porteuse du bouclier ( 56 ) thermique et ayant normalement au côté froid une certaine hauteur, la hauteur d'au moins une rangée ( 71 ) d'éléments ( 22, 73 ) du bouclier thermique s'élevant dans une direction ( 32 ) d'élévation, la région s'élevant des éléments du bouclier thermique s'étendant dans la direction ( 32 ) d'élévation sensiblement jusqu'à au moins un côté ( 30b ) périphérique ou jusqu'à une saillie ( 38 ) prolongeant le côté ( 26 ) chaud au-delà de la surface de base du côté ( 28 ) froid, la direction ( 32 ) d'élévation des éléments ( 22, 73 ) du bouclier thermique étant tournée vers un côté ( 74 ) frontal commun de la rangée ( 71 ),
**caractérisé en ce que**
la rangée ( 71 ) est une rangée du bouclier ( 20, 56 ) thermique de fin en amont, la direction d'élévation étant dirigée vers l'amont.

2. Bouclier ( 20, 56 ) thermique suivant la revendication 1,
**caractérisé en ce que**
la région d'élévation s'étend au moins sur toute la surface de base du côté ( 28 ) froid.

3. Bouclier ( 20, 56 ) thermique suivant l'une des revendications 1 ou 2,
**caractérisé en ce que**
la hauteur de l'élément ( 22, 73 ) du bouclier thermique dans la région d'élévation s'élève constamment dans la direction ( 32 ) d'élévation, notamment linéairement.

4. Bouclier ( 20, 56 ) thermique suivant l'une des revendications 1 à 3,
**caractérisé en ce que**
la direction ( 32 ) d'élévation est sensiblement perpendiculaire à un côté ( 30b ) périphérique.

5. Bouclier ( 20, 56 ) thermique suivant la revendication 4,
**caractérisé en ce que**
les éléments ( 22, 73 ) du bouclier thermique comprennent, avec une hauteur croissante sur le côté ( 30b ) périphérique sur lequel est tournée la direction ( 32 ) d'élévation, une saillie ( 38 ) s'étendant sensiblement sur la largeur du côté ( 30b ) périphérique, laquelle ( 38 ) a un côté ( 40 ) supérieur compris par le côté ( 26 ) chaud et un côté ( 42 ) inférieur opposé.

6. Bouclier ( 20, 56 ) thermique suivant l'une des revendications 1 à 5,
**caractérisé en ce que**
le côté ( 74 ) frontal d'un élément ( 20, 73 ) du bouclier thermique est plus haut qu'une région de la structure ( 24, 58 ) porteuse voisine du côté ( 74 ) frontal.

7. Bouclier ( 20, 56 ) thermique suivant la revendication 6,
**caractérisé en ce que**
la saillie ( 38 ) de l'élément du bouclier thermique dépasse de la région de la structure porteuse voisine.

8. Chambre de combustion ( 10 ) pour une turbine à gaz, comprenant une paroi ( 48 ) de chambre de combustion, qui délimite un trajet ( 50 ) pour du gaz chaud passant dans la chambre de combustion ( 10 ) et qui a, à son extrémité en aval, une sortie ( 52 ) de chambre de combustion, qui peut être mise sur une entrée de la turbine à gaz et qui a, à son extrémité en amont, une extrémité ( 54 ) de tête de chambre de combustion, l'extrémité de tête de chambre de combustion comprenant un agencement ( 11 ) de brûleur,
**caractérisée en ce que**
la chambre de combustion ( 10 ) comprend un bouclier ( 20, 56 ) thermique suivant l'une des revendications 1 à 7.

9. Chambre de combustion ( 10 ) suivant la revendication 8,
**caractérisée en ce que**
la paroi ( 48 ) de la chambre de combustion comprend, à son extrémité en amont, un composant ( 62 ) faisant le tour, dans lequel est ménagée au moins une rainure ( 64, 66 ) annulaire, dans laquelle, dans les rainures ( 64, 66 ), est fixé un fond ( 68 ) de flamme délimitant vers l'intérieur l'extrémité ( 54 ) de la tête de la chambre de combustion et le bouclier ( 20, 56 ) thermique est voisin, en laissant une fente ( 61 ) de dilatation, par la rangée ( 71 ) de fin faisant le tour, du rebord ( 70 ) délimitant la rainure ( 64 ) d'un côté, la direction ( 70 ) d'élévation des éléments ( 20, 73 ) du bouclier thermique de la rangée ( 71 ) de fin étant tournée vers le rebord ( 70 ) et le côté ( 74 ) frontal tourné vers le rebord ( 70 ) de la rangée ( 71 ) de fin étant plus haut que la région voisine du rebord ( 70 ).

10. Chambre de combustion ( 10 ) suivant la revendication 9,
**caractérisée en ce que**
les éléments ( 20, 73 ) du bouclier thermique de la rangée ( 71 ) de fin sont constitués suivant la revendication 5, la saillie ( 38 ) dépassant de la région du rebord ( 70 ), qui s'étend entre le fond ( 68 ) de flamme et la région ( 71 ) de fin.

11. Procédé d'habillage d'une chambre de combustion ( 46 ) pour une turbine à gaz, comprenant un bouclier ( 20, 56 ) thermique, des éléments ( 22, 60 ) du bouclier thermique en rangée, en laissant des fentes ( 61 ) de dilatation entre les éléments ( 22, 60 ) du bouclier thermique, fixés à une structure ( 58 ) porteuse du bouclier ( 56 ) thermique disposée sur la paroi ( 48 ) de la chambre de combustion ( 46 ),
(a) dans lequel, à l'exception d'une rangée ( 76 ) disposée en dernier, on adapte les fentes de dilatation entre les rangées à une largeur de consigne de fente de dilatation,
(b) et on détermine une largeur restante de la lacune laissée pour la rangée ( 76 ) disposée en dernier,
(c) à partir de cette largeur et en tenant compte de la largeur de fente de dilatation de consigne, on détermine une largeur de consigne des éléments ( 60 ) du bouclier thermique de la rangée ( 76 ) disposée en dernier,
(d) et on fabrique les éléments ( 60 ) du bouclier thermique de la rangée ( 76 ) à mettre en dernier, conformément à la largeur de consigne des éléments ( 60 ) du bouclier thermique et on les met dans la lacune,
**caractérisé en ce que**
on détermine la largeur de la lacune laissée pour la rangée ( 76 ) à mettre en dernier en habillant la lacune provisoirement d'éléments ( 60 ) du bouclier thermique de largeur présumée et en déterminant la largeur d'au moins une fente ( 61 ) de dilatation voisine d'une rangée montée provisoirement pendant le fonctionnement de la chambre de combustion ( 46 ).
